# FASCICULE DE BREVET EUROPEEN

(11) **EP 0 888 814 B1**
(45) Date de publication et mention de la délivrance du brevet: **22.09.2004**
(21) Numéro de dépôt: 98401547.9
(22) Date de dépôt: 24.06.1998
(51) Int. Cl.: B01J 19/24, B01J 19/32, B01J 19/12, B01J 19/10, B01J 32/00, B01J 21/08, B01J 21/06, B01J 23/06, B01J 23/42, B01J 23/72, B01D 53/86

(54) **Support de réaction et réacteur pour le traitement de composés chimiques solides et fluides sous l'action d'un phénomène ondulatoire**
Reaktionsträger sowie Reaktor zur Behandlung von festen und fluiden Reaktanten unter Einfluss von einer wellenförmigen Bewegung
Reaction support and reactor for the treatment of solid and fluid reactants subjected to a wave-shaped movement

(30) Priorité: 01.07.1997 FR 9708258
(43) Date de publication de la demande: 07.01.1999
(73) Titulaire: NanoPoudres Technologies, 75005 Paris (FR)
(72) Inventeur: Bailleux, Christian, 75019 Paris (FR); Perrodin, Norbert, 45300 Pithiviers (FR)

(56) Documents cités:
- EP-A- 0 634 363
- DD-A- 260 660
- DE-A- 4 136 949
- US-A- 4 935 114
- US-A- 5 108 654
- US-A- 5 501 801
- K. HOFSTADLER ET AL.: "New Reactor Design for Photocatalytic Wastewater Treatment with TiO2 Immobilized on Fused-Silica Glass Fibers: Photomineralization of 4-Chlorophenol" ENVIRONMENTAL SCIENCE AND TECHNOLOGY., vol. 28, no. 4, avril 1994, pages 670-674, XP000432950 EASTON, PA US
- PATENT ABSTRACTS OF JAPAN vol. 95, no. 1, 28 février 1995 & JP 06 287012 A (NITTO CHEM. IND. CO. LTD. ET AL.), 11 octobre 1994 -& DATABASE WPI Section Ch, Week 9445 Derwent Publications Ltd., London, GB; Class E36, AN 94-363435 XP002059293 & JP 06 287012 (KOSHUHA NETSUREN K.K. & NITTO CHEM. IND. CO. LTD.) , 11 octobre 1994
- PATENT ABSTRACTS OF JAPAN vol. 15, no. 361 (C-0867), 12 septembre 1991 & JP 03 143529 A (HITACHI LTD.), 19 juin 1991 -& DATABASE WPI Section Ch, Week 9131 Derwent Publications Ltd., London, GB; Class D22, AN 91-225726 XP002059294 & JP 03 143529 (HITACHI LTD.) -& CHEMICAL ABSTRACTS, vol. 115, no. 16, 21 octobre 1991 Columbus, Ohio, US; abstract no. 165648, HIROSHI KAWAGOE ET AL.: "Apparatus and Method for Catalytic Deodorization of Odorous Air" XP002059292
- PATENT ABSTRACTS OF JAPAN vol. 97, no. 5, 30 mai 1997 & JP 09 007546 A (TOSHIBA LIGHTING LAMP TECHNOL. COMP.), 10 janvier 1997 -& DATABASE WPI Section Ch, Week 9712 Derwent Publications Ltd., London, GB; Class J04, AN 97-124282 XP002059295 & JP 09 007546 (TOSHIBA LIGHTECH K.K.) , 10 janvier 1997

## Description

La présente invention concerne des supports de réaction pour le traitement d'un fluide sous l'action d'un phénomène ondulatoire. Elle concerne en outre des procédés de fabrication de tels supports ainsi que des réacteurs de traitement de fluide, sur de tels supports de réaction.

Les procédés actuels de traitement des liquides et des gaz, notamment en vue de leur épuration, mettent en oeuvre fréquemment des réactions chimiques provoquées par des rayonnements de type électromagnétique ou électromécanique. Ces opérations s'opèrent à la surface d'un support solide ou au contact de catalyseurs supportés.

Dans les réacteurs actuels, le support solide au contact du fluide à traiter peut être qualifié de structure bidimensionnelle telle qu'un plan, une surface cylindrique, un tissu,...

Ainsi par exemple, un support massif formé d'un bloc de verre massif est recouvert en surface d'un photocatalyseur. Une lampe émettant des ultraviolets est disposée en regard de cette surface. Le flux gazeux à traiter circule entre la lampe et le bloc de verre. Sous l'action du rayonnement ultraviolet, les molécules de gaz en contact avec la couche active de photocatalyseur sont l'objet de réactions chimiques, lors de la circulation du gaz.

Le rendement, tant chimique, qu'énergétique, de telles installations est faible en raison de l'insuffisance des contacts entre la veine fluide tridimensionnelle et le support réactionnel bidimensionnel. L'invention a pour but de proposer un support de réaction tridimensionnel et des réacteurs tridimensionnels l'incorporant, améliorant le rendement des procédés de traitement de fluide sous l'action d'un phénomène ondulatoire.

A cet effet, l'invention a pour objet un réacteur photocatalytique ultra-violet, de traitement de fluide comprenant :
i. un support de réaction non absorbant de la lumière ultra-violette et permettant la circulation du fluide à traiter au travers dudit support,
ii. un photocatalyseur,
qui. des moyens d'émission d'un rayonnement ultraviolet au travers dudit support,
caractérisé en ce que
le support de réaction comporte un agrégat tridimensionnel d'éléments constitués essentiellement de silice interconnectés par frittage contrôlé afin d'obtenir des ponts optiques diffusant ainsi qu'une porosité associée à un taux de vide compris entre 20 et 80%.

Le support de réaction est essentiellement à base de silice en raison de ses propriétés optiques de non absorbance de l'ultraviolet à l'infrarouge, ainsi que des propriétés électriques et mécaniques de ce matériau. Le domaine d'utilisation, tel par exemple l'ultraviolet lointain, ou le comportement sous micro-ondes, conditionne le choix de la matière première, soit silice synthétique, quartz, quartzites, sable dit "de Fontainebleau", à partir de laquelle est obtenue la qualité de silice adaptée à l'usage visé.

De même le choix du catalyseur à fixer sur ce support de silice est directement fonction de l'application visée, comme l'utilisation d'un photocatalyseur de type TiO_{2.} ZnO, titanates ou autres, pour la minéralisation des composés organiques présents dans l'air, et la destruction des microbes, bactéries, virus, spores et champignons ; ou celle de catalyseurs de combustion type platine, oxyde de cuivre,... pour la combustion des composés volatils présents dans l'air.

L'invention a en outre pour objet les procédés de fabrication des supports de réaction définis ci-dessus, à partir soit de silice synthétique, quartz, quartzites, "sable de Fontainebleau", déchets de fabrication de silice, par formage, par chauffage, notamment via la mise en oeuvre de plasma inductif haute fréquence, et du dépôt sur la structure ainsi réalisée de catalyseurs spécifiques correspondant à l'utilisation visée par des techniques d'imprégnation de types : barbotines, gels, dépôts en phase vapeur, ainsi que la réalisation simultanée de la structure et du dépôt actif au plasma inductif.

Suivant des modes particuliers de mise en oeuvre, le procédé peut présenter l'une ou plusieurs des caractéristiques suivantes :
- supports constitués d'éléments non liés les uns aux autres et pouvant conduire à des réacteurs à lits mobiles homogènes ou hétérogènes ;
- supports constitués d'éléments liés les uns aux autres par frittage, revêtus ou non de catalyseurs, au travers desquels les fluides à traiter circulent ;
- supports constitués d'éléments aptes à jouer le rôle d'absorbants thermiques ou d'éléments chauffants au sein d'une masse réactionnelle solide, permettant ainsi la réalisation de réacteurs chimiques à sec.

Les réacteurs selon l'invention sont aptes :
- soit à la synthèse chimique ;
- soit au traitement chimique des effluents notamment air et eau afin de permettre la minéralisation complète en CO₂, H₂O, N₂ des composés organiques présents par photocatalyse ou par combustion catalytique ;
- soit au traitement bactéricide, notamment air et eau de ces effluents.

L'invention sera mieux comprise à la lecture de la description qui va suivre, donnée uniquement à titre d'exemple et faite en se référant aux dessins, sur lesquels :
- la figure 1 est une vue schématique du principe de fonctionnement des réacteurs selon l'invention ;
- les figures 2 et 3 sont des vues schématiques respectivement en plan et en perspective de la structure de deux variantes de réalisation du support de réaction selon l'invention ;
- la figure 4 est une vue schématique d'une installation de préparation d'un support selon l'invention ;
- les figures 5 et 6 sont des vues en coupe longitudinale de réacteurs photocatalytiques selon l'invention comportant respectivement un support non fritté et un support fritté ;
- la figure 7 est une coupe longitudinale d'un réacteur de traitement à ondes acoustiques, comportant un support de réaction selon l'invention ;
- les figures 8 et 9 sont des vues respectivement en perspective et en coupe de deux modes de réalisation de luminaire intégrant un réacteur de traitement selon l'invention.

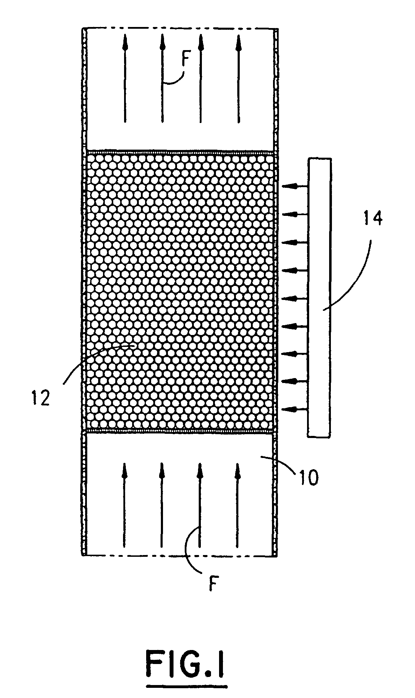

Le réacteur schématisé sur la figure 1 comporte essentiellement un conduit réactionnel 10 tubulaire dans lequel est disposé, suivant toute sa section, un insert cylindrique 12 formant un support de réaction pour le traitement d'un fluide circulant dans la conduite 10 suivant le sens des flèches F.

En outre, le réacteur comporte une source d'ondes 14 couplée au support de réaction 12. Dans l'exemple représenté, la source d'ondes 14 est formée par des moyens d'émission, à l'extérieur du support de réaction 12, d'un rayonnement lumineux, notamment ultraviolet.

Suivant l'invention, le support de réaction 12 est un agrégat tridimensionnel d'éléments constitués essentiellement de silice, SiO₂, la structure de l'agrégat étant perméable pour une circulation du fluide à traiter au travers de l'agrégat.

La silice est un matériau de choix pour les structures détaillées ci-après, du fait :
- qu'elle est un verre, donc plus facilement apte à se fritter, et à donner des structures isotropes du point de vue de ses propriétés après recuit ;
- qu'elle est dotée de remarquables propriétés de transmission de la lumière sans absorption dans l'ultraviolet et dans l'infrarouge.

Les éléments constitués de silice peuvent être formés à partir de granulats de quartz, de quartzites, ou encore de sable de haute pureté, notamment du sable dit "de Fontainebleau" sphéroïdisé et transformés en silice par chauffage à haute température, notamment par mise en oeuvre d'un plasma haute fréquence.

Les éléments du support de réaction sont avantageusement des billes sphériques de silice ayant un diamètre moyen compris entre 100 µm et 3000 µm et notamment égal à 200, 400, 800, 1300, ou 2000 µm.

De plus, selon les applications, des aspérités peuvent être créées à la surface de ces billes sphériques, afin de faciliter la diffusion de la lumière circulant vers le fluide à traiter.

Dans le cas où la lumière utilisée est la lumière solaire, la silice peut être remplacé par le verre.

Suivant l'invention les éléments formant le support de réaction sont agglomérés par frittage **selon une porosité contrôlée, taux de vide de 80 à 20 %**. Ce frittage peut être réalisé par chauffage d'un ensemble de billes maintenues comprimées les unes contre les autres de sorte qu'une soudure s'établisse entre elles. Dans ce cas, les billes jointives, ainsi interconnectées, forment des chapelets et se comportent comme des fibres optiques canalisant la lumière au travers du support de réaction.

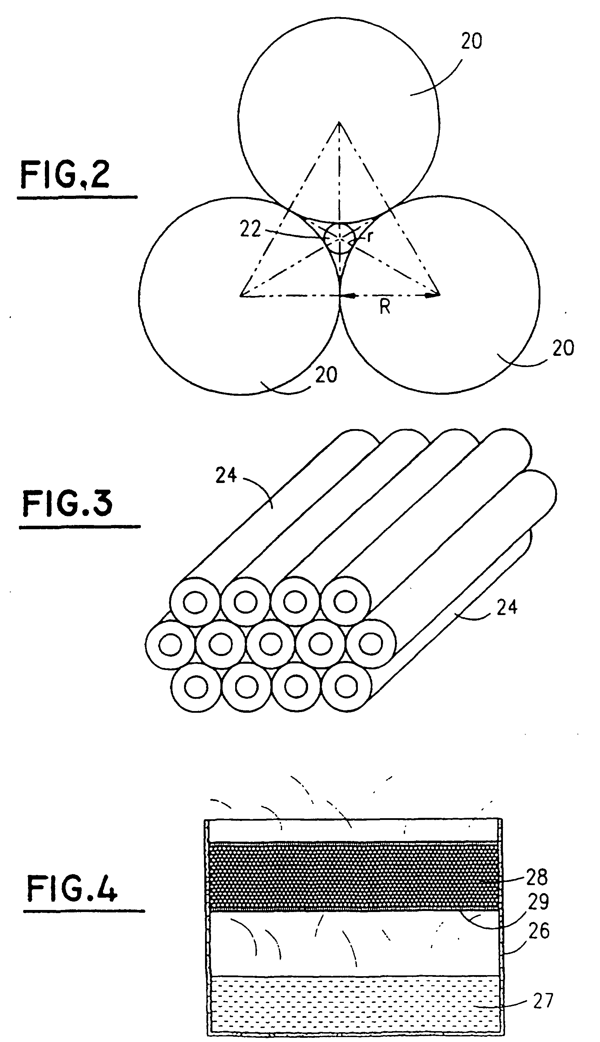

Sur la figure 2 est représenté un exemple d'une structure organisée pour le support de réaction.

Dans ce support, les éléments de silice comportent un premier ensemble de billes non revêtues de catalyseur 20 de grand rayon, noté R, et un second ensemble de billes revêtues de catalyseur 22 de petit rayon, noté r. Avantageusement, afin d'obtenir un support de réaction aussi compact que possible tout en étant suffisamment poreux pour permettre le passage du fluide à traiter, les billes 22 de petit rayon sont dimensionnées de sorte que celles-ci se logent dans les espaces ou interstices définis entre quatre billes 20 contiguës de grand rayon. L'agencement des billes 20 de grand rayon s'effectue alors suivant un système hexagonal compact.

Afin d'obtenir un tel agencement, le rayon r des billes 22 est égal à (2/√/3-1)R. Ainsi, par exemple pour des billes 20 ayant un rayon R égal à 200 µm, les billes 22 ont un rayon d'environ 30µm.

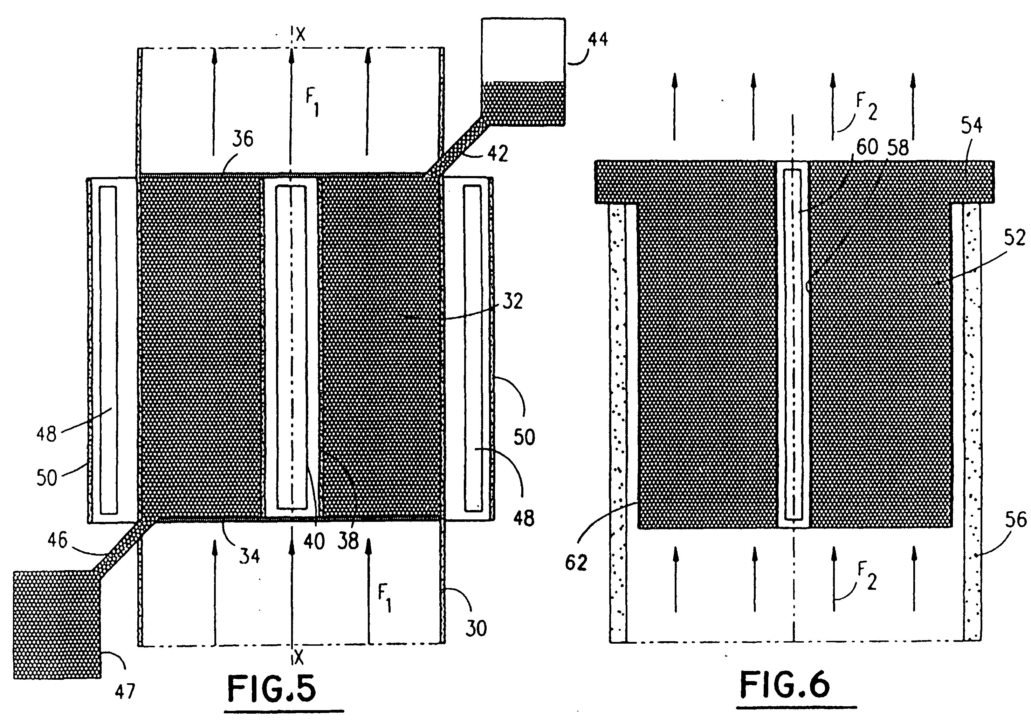

Dans le mode de réalisation de la figure 3, le support de réaction comporte un ensemble de tubes rectilignes de silice 24 ayant par exemple un diamètre extérieur de 5 à 1 mm et un diamètre intérieur de 0,5 à 3 mm. Ces tubes s'étendent parallèlement les uns aux autres et constituent une gerbe. Avantageusement, ils sont frittés, de sorte que les différents tubes sont agglomérés et constituent un corps solide avec des passages faciles de la lumière de tube en tube.

Le fluide à traiter circule au travers de ce support d'une part à l'intérieur des tubes et d'autre part dans les conduits de section sensiblement triangulaire délimités entre trois tubes contigus.

Un tel agencement des éléments du support de réaction permet la réalisation de réacteurs à faible perte de charge relativement au fluide circulant à travers, ainsi que la détermination précise de la section offerte au passage du fluide, de sorte que le débit de celui-ci peut être facilement prédéterminé.

En variante, les tubes sont remplacés par des baguettes pleines de silice frittée, de sorte que le gaz ne circule qu'au travers des conduits de section sensiblement triangulaire, définis entre les baguettes.

Suivant encore une autre variante, le support de réaction est formé par un ensemble de brins de silice tissés, ou encore à partir d'un ensemble de plaques et de baguettes de silice assemblées, ou de fibres optiques.

Dans le cas où le support de réaction est associé à des moyens d'émission d'un rayonnement lumineux favorisant le traitement du fluide, celui-ci comporte un photocatalyseur, notamment du dioxyde de titane, TiO₂, en lumière ultraviolette. La création d'une paire électron-trou par absorption d'un photon par ce catalyseur doté de propriétés semiconductrices est à même de permettre la minéralisation des composés organiques présents dans l'air de deux façons :
- l'oxydation, par le trou généré, de la matière organique adsorbée,
- l'oxydation par l'oxygène de l'air, excité par fixation de l'électron libéré, de la matière organique non adsorbée. Cet oxygène excité est en outre doté de propriétés bactéricides.

Dans le cas de traitement en milieu aqueux, ce sont les radicaux OH générés qui jouent un rôle similaire à celui de l'oxygène excité.

Suivant un premier mode de mise en oeuvre, le photocatalyseur est supporté par les éléments constituant le support de réaction. En variante le photocatalyseur est logé entre les éléments de silice.

Une première voie dite "barbotine" consiste à répéter plusieurs fois les opérations successives suivantes.

On effectue d'abord un traitement d'apprêt sur les éléments de silice, afin de former une couche d'accrochage : traitement de texturation de la surface à l'acide fluorhydrique, suivi d'un traitement de mordage, à base par exemple de sel de chrome ou de cuivre.

On procède ensuite à un trempage dans un bain appelé barbotine comportant une forte concentration en dioxyde de titane. Ce dioxyde de titane est disponible commercialement, en provenance des grands producteurs tels que Rhône-Poulenc, Degussa, ou autres.

Après égouttage, les billes de silice revêtues de la barbotine subissent un traitement thermique afin de fixer le dioxyde de titane à leur surface de 300 à 500°C. La séquence trempage, égouttage, séchage est répétée plusieurs fois, jusqu'à l'obtention de l'épaisseur souhaitée.

La seconde voie est communément appelée "voie gel".

Elle consiste à former un gel de silice sur le support, puis à fritter celui-ci à température élevée de 1000 à 1600°C. Le matériau ainsi obtenu est ensuite imprégné d'un gel de dioxyde de titane, préparé de préférence à partir d'alcoolates ou d'alcoxydes de titane, puis est fritté à température modérée, inférieure à 500°C afin d'obtenir 100% du dioxyde de titane sous forme d'anatase, la forme cristalline active du TiO₂.

Si la température est supérieure à 500°C, il y a formation de la forme cristalline rutile, qui est moins efficace.

La troisième voie consiste en une voie chimique.

La figure 4 montre une installation pour la fixation de dioxyde de titane sur un support de silice perméable.

Cette installation comporte une cuve 26 ouverte dans sa partie supérieure. Dans la partie inférieure de celle-ci est placée une solution 27 de tétrachlorure de titane, TiCl₄.

Dans la partie supérieure de la cuve, s'étend transversalement le support perméable de silice noté 28.

Dans le cas où celle-ci est réalisée par un ensemble de billes indépendantes, ces dernières sont supportées par une grille 29, s'étendant suivant une section transversale de la cuve 26.

Sous l'effet d'un apport de chaleur, le tétrachlorure de titane se dépose alors sur les éléments de silice.

Le support ainsi recouvert est mis en présence de vapeur d'eau dans une étuve, de sorte que le tétrachlorure de titane réagit avec l'eau pour former du dioxyde de titane, qui se fixe sur les éléments de silice, et de l'acide chlorhydrique.

La fixation définitive du dioxyde de titane sur les éléments de silice est enfin assurée par un traitement thermique, en évitant comme précédemment de dépasser 500°C.

La quatrième voie consiste en une fixation par plasma.

Celle-ci consiste à injecter du tétrachlorure de titane dans un plasma d'air dans la phase finale de sphéroïdisation de billes de silice formées à partir de granulats de silice synthétique, de quartz, de quartzites, de sable dit "de Fontainebleau", ou de silice obtenus notamment par broyage de pièces hors normes, rejetées en fabrication.

Sur la figure 5, est représenté un exemple de réacteur de traitement de gaz par rayonnement ultraviolet.

Ce réacteur est généralement de forme tubulaire d'axe X-X supposé vertical. Il est délimité extérieurement par un tube de silice 30 transparent, destiné à retenir le support de réaction formé par un lit de billes de silice indépendantes 32. Le lit de silice 32 est retenu de part et d'autre transversalement au tube extérieur 30 par des diaphragmes perméables aux gaz 34, 36.

Suivant l'axe X-X, le lit 32 est traversé par un tube axial de silice transparent 38 délimitant axialement un logement pour une lampe rectiligne 40 d'émission d'un rayonnement ultraviolet.

L'extrémité supérieure du lit 32 est reliée par une conduite 42 à un réservoir 44 contenant des billes de silice. Ce réservoir est maintenu légèrement en surpression et constitue un dispositif d'injection de billes de silice.

En outre, dans sa partie inférieure, le lit de billes de silice 32 est relié par une conduite 46 à un réservoir 47 de recueil des billes de silice en excès, où peut se faire, par chauffage autour de 400°C à l'air, la régénération du catalyseur par combustion des composés organiques adsorbés par le TiO_{2.} et qui n'auraient pas été complètement minéralisés par l'action de la lumière ultraviolette.

Sur toute la périphérie du support de réaction 32 sont disposées longitudinalement à l'extérieur du tube 30 un ensemble de lampes rectilignes à rayonnement ultraviolet 48. Ces dernières sont entourées par un réflecteur 50 de forme cylindrique s'étendant autour du support de réaction et sur toute la longueur de celui-ci.

En outre, il est prévu des moyens non représentés de mise en circulation du fluide à traiter au travers du support de réaction 32 suivant la longueur du tube 30 comme représenté par les flèches F1.

Dans ce mode de réalisation, on comprend que le rayonnement ultraviolet issu des lampes 40 et 48 est émis en direction du support de réaction 32 au travers des tubes transparents 30 et 38. Les éléments de silice formant le support de réaction 32 conduisent le rayonnement ultraviolet en tout point de l'espace réactionnel délimité entre les deux tubes. Le rayonnement ultraviolet est ainsi diffusé entre les éléments de silice.

Dans l'espace laissé libre entre les éléments de silice s'écoule le gaz à traiter, de sorte que celui-ci réagit, par exemple en présence d'un photocatalyseur porté par les éléments de silice, sous l'action du rayonnement ultraviolet.

Dans la variante de réalisation de la figure 6, le support de réaction, noté 52, est formé par un ensemble d'éléments de silice frittés, de sorte que celui-ci constitue un corps aggloméré solide. Dans ces conditions, les diaphragmes 34, 36 peuvent être supprimés.

Le support de réaction 52 comporte une collerette 54 permettant un positionnement sur un support tubulaire 56 formé par exemple en métal ou en céramique, avec un revêtement intérieur réfléchissant.

Comme précédemment, le support de réaction 52 est traversé par un canal axial 58 dans lequel est disposée une lampe à rayonnement ultraviolet 60.

La paroi latérale du canal axial 58 et les parois latérales extérieures, notées 62, du support de réaction sont avantageusement glacées afin de faciliter la pénétration du rayonnement ultraviolet dans le support de réaction. Ce glaçage assure en outre une canalisation du flux de fluide à traiter circulant suivant le sens des flèches F2.

Il permet également d'éviter d'avoir à tenir des cotes trop précises, lors de la réalisation du bloc. Le changement de bloc peut se faire très facilement grâce à ce glaçage et à la collerette. Une circulation de l'air en aller-retour interne au bloc est également réalisable grâce à un glaçage interne, qui peut être réalisé directement au plasma lors de la fabrication du bloc fritté.

Pour le traitement de débits importants d'air, il y a lieu d'augmenter le taux de vide des structures support. La technique de choix est le couplage frittage-sphéroïdisation au niveau du traitement plasma. Le positionnement du réceptacle du futur support, son déplacement, l'injection latérale de billes préalablement préparées permettent d'obtenir le taux de vide souhaité pour la structure support et si nécessaire d'obtenir des gradients de porosité.

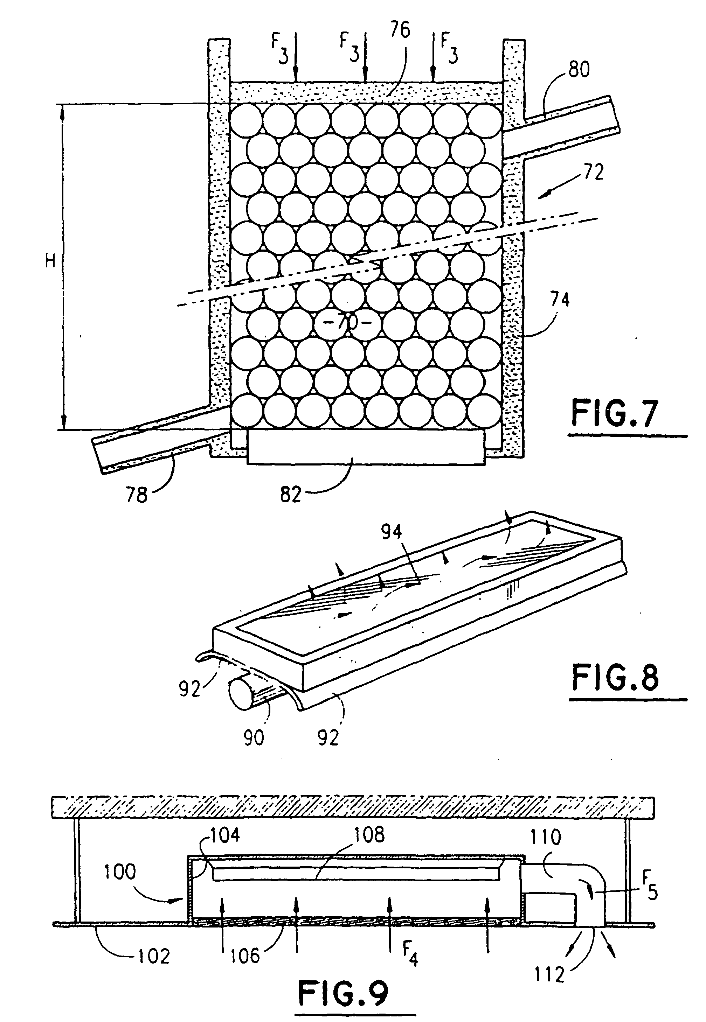

Le réacteur représenté sur la figure 7 est un réacteur ultrasonique comportant un support de réaction 70 formé d'un lit de billes de silice indépendantes. Le réacteur comporte une enceinte 72 formée par une cuve 74 munie d'un couvercle 76 coulissant suivant l'axe de la cuve.

La cuve 72 est munie dans sa partie inférieure d'une entrée d'alimentation 78 pour le flux réactionnel et dans sa partie supérieure, au-dessous du couvercle 76, d'une sortie 80 d'évacuation du flux réactionnel traité.

Dans le fond de la cuve 74 est disposée une source d'ultrasons 82 couplée mécaniquement au support de réaction 70. La source d'ultrasons est, par exemple, formée par une céramique piézo-électrique reliée à des moyens d'excitation électrique non représentés.

Les billes de silice indépendantes constituant le support de réaction 70 sont disposées à l'intérieur de la cuve et reposent directement en contact avec la source d'ultrasons 82. Le couvercle coulissant 76 est mis sous contrainte mécanique suivant le sens des flèches F3 par application d'une charge non représentée qui, sous l'effet de son propre poids, presse les billes de silice les unes contre les autres.

Avantageusement, la hauteur H de la cuve entre la source d'ultrasons et la surface en regard du couvercle 76 est telle qu'une onde ultrasonique stationnaire s'établit suivant la hauteur de la cuve. En particulier, la hauteur H de la cuve est telle que H = kλ/2 + λ/4 avec k un entier naturel et λ la longueur d'onde des ondes ultrasonores.

Dans un tel réacteur, le diamètre moyen des billes de silice, qu'elles soient frittées ou non, est millimétrique.

Grâce aux propriétés élastiques de la silice tant à basse fréquence, qu'à haute fréquence, et à son faible facteur d'atténuation, le lit de billes de silice se comporte comme un ensemble de réémetteurs d'ultrasons dans tout le volume du réacteur. Aussi, grâce à l'établissement d'ondes stationnaires suivant la hauteur du réacteur, les fluides traversant celui-ci rencontrent une série de noeuds, correspondant à des niveaux vibrationnels quasi-nuls, et de ventres, correspondant à des niveaux vibrationnels maximum. C'est au niveau des ventres que les réactions sont induites, soit aux interfaces pour les gaz, soit par cavitation pour les liquides.

On comprend que dans un tel réacteur, le milieu réactionnel s'étend suivant tout le volume du réacteur non occupé par les billes de silice.

Suivant un autre mode de réalisation non représenté, la source d'ultrasons est remplacée par une source de micro-ondes, dont la fréquence est située dans la gamme du GHz du spectre électromagnétique. Le support de réaction est dans le champ de la source de micro-ondes.

Suivant la structure des billes de silice, et en particulier de la pureté de la matière première utilisée pour leur fabrication, le support de réaction se comporte comme un matériau inerte non chauffant, ou comme un matériau chauffant, sous l'action de la propagation des micro-ondes.

Lorsque le lit de billes de silice est réalisé à partir de silice synthétique, c'est à dire de silice obtenue à partir de tétrachlorure de silicium traité par un plasma d'air haute fréquence, alors le support de réaction conduit les micro-ondes, mais ne constitue pas un matériau chauffant de sorte qu'il joue un rôle passif.

En outre, le support de réaction constitue alors un tampon thermique inerte jusqu'à la température de fusion de la silice, 1600°C, pouvant être mis à profit pour éviter les emballements thermiques liés aux réactions exothermiques. Les caractéristiques du tampon thermique sont ajustées en faisant varier le rapport des masses : masse réactionnelle / masse des billes de silice, qui peuvent dans ce cas ne pas être en contact les unes avec les autres.

Lorsque les billes de silice sont réalisées à partir de matières de moindre pureté, notamment à partir de sable "de Fontainebleau", de quartzites ou de quartz, le support de réaction constitue un matériau chauffant, dont les propriétés sont utilisées afin de permettre la réaction des constituants de la masse réactionnelle.

La fabrication des billes de silice peut avantageusement être réalisée par passage des matières premières, quartz, quartzites, sable, dans un plasma haute fréquence.

Il en résulte, sous l'effet des très hautes températures, une volatilisation superficielle des impuretés. Ainsi, la silice formant l'extérieur des éléments du support est très pure, de sorte que la masse réactionnelle est en contact avec de la silice chimiquement inerte.

Dans tous les cas, le volume occupé par les billes de silice est inférieur à 70% du volume total. Ces billes peuvent être frittées, ou indépendantes, en contact les unes des autres pour le traitement des fluides.

Pour le traitement des solides, elles sont indépendantes et mêlées à la masse réactionnelle. Elles sont récupérables, une fois la réaction réalisée.

Sur la figure 8 est représenté un exemple d'intégration d'un support de réaction dans un luminaire. Celui-ci comporte un tube fluorescent 90 avec un déflecteur longitudinal formé par deux demi-cylindres 92 s'étendant parallèlement l'un à l'autre de part et d'autre du tube 90.

Un bloc parallèlépipédique 94 constituant un support de réaction formé de billes de silice recouvertes de photocatalyseur est supporté par le boîtier support. La surface inférieure de ce bloc est en regard de la partie supérieure exposée du tube fluorescent 90.

On comprend que sous l'effet de la chaleur produite par le tube fluorescent 90, l'air chauffé monte par convection thermique. Il circule alors au travers du support de réaction 94, au travers duquel il est traité par un phénomène photocatalytique, comme expliqué dans les modes de réalisation précédents.

Sur la figure 9 est représenté un autre mode de réalisation d'un luminaire intégrant un support de réaction selon l'invention.

Sur cette figure, le luminaire, désigné par la référence 100, est intégré dans un faux plafond 102, **ou dans le plafond.**. Il comporte un caisson 104 de forme sensiblement parallèlépipédique obturé par une plaque de silice frittée 106 dont la surface inférieure affleure à la surface du faux plafond 102.

Les éléments formant la plaque 106 sont revêtus d'un photocatalyseur, par exemple du dioxyde de titane. En outre, une couche absorbant le rayonnement ultraviolet est prévue sur l'une des faces de cette plaque.

A l'intérieur du caisson 104 est disposé un ensemble de tubes d'éclairage 108 susceptibles de produire également un rayonnement ultraviolet. En outre, une conduite d'évacuation 110 relie depuis une paroi latérale du caisson 104 l'intérieur de celui-ci à une bouche d'évacuation 112 ménagée dans le faux plafond 102.
Comme précédemment, l'air de la pièce circule au travers du luminaire suivant le sens des flèches F4 et F5 sous l'effet de la chaleur dégagée par les moyens d'éclairage 108. L'air passe ainsi au travers du support de réaction 106 où il est traité, puis il est évacué par la conduite 110 jusqu'à la bouche 112.

La circulation de l'air peut être accélérée au moyen d'un ventilateur prévu sur la conduite 110.

Le support de réaction décrit ici peut être mis en oeuvre en présence d'un photocatalyseur comme le dioxyde de titane.

En outre, le dioxyde de titane peut être remplacé par de l'oxyde de cuivre ou de l'oxyde de chrome, notamment lorsque le support de réaction est associé à une lampe d'émission d'un rayonnement infrarouge.

Un tel dispositif est particulièrement adapté au traitement des composés organiques volatils dits C.O.V., par combustion catalytique. Dans un tel système le chauffage direct du catalyseur permet de substantielles économies d'énergie.

Enfin, un tel support de réaction est utilisable tant en milieu gazeux, qu'en milieu liquide.

## Revendications

1. Réacteur photocatalytique ultra-violet, de traitement de fluide comprenant :
i. un support de réaction non absorbant de la lumière ultra-violette et permettant la circulation du fluide à traiter au travers dudit support,
ii. un photocatalyseur,
iii. des moyens d'émission d'un rayonnement ultraviolet au travers dudit support,
**caractérisé en ce que**
le support de réaction comporte un agrégat tridimensionnel d'éléments constitués essentiellement de silice interconnectés par frittage contrôlé afin d'obtenir des ponts optiques diffusant ainsi qu'une porosité associée à un taux de vide compris entre 20 et 80 %.

2. Réacteur selon la revendication 1, **caractérisé en ce que** le photocatalyseur est constitué de dioxyde de titane sous forme anatase, formé directement sur ledit agrégat.

3. Réacteur selon la revendication 1 **caractérisé en ce que** ledit agrégat est glacé en regard des émetteurs lumineux, afin de limiter les pertes au niveau de l'entrée de la lumière dans la structure support.

4. Procédé de fabrication du réacteur selon la revendication 2, **caractérisé en ce que** le dépôt de dioxyde de titane est obtenu à partir de dioxyde de titane, de tétrachlorure de titane, d'halogénures de titane, ou d'alcoolates de titane.

5. Réacteur selon la revendication 1, **caractérisé en ce que** lesdits moyens d'émission comprennent une lampe d'éclairage (90 ; 108) d'un luminaire, et **en ce que** ledit support de réaction (94 ; 106) est adapté pour être intégré dans ledit luminaire.

6. Réacteur selon la revendication 1, **caractérisé en ce qu'**il est propre à être intégré dans le plafond ou faux-plafond (102) d'une pièce.

## Patentansprüche

1. Photokatalytischer UV-Reaktor zur Behandlung von Flüssig- und Gasstoffen, beinhaltend :
i. Eine UV-Licht nicht absorbierende Reagenzgrundlage, die die Zirkulation der zu behandelnden Substanz erlaubt.
ii. Einen Photokatalysator
iii. Vorrichtungen zur Ausstrahlung von UV-Licht über die Reagenzgrundlage, charakterisiert dadurch,
dass diese Reagenzgrundlage ein dreidimensionales Aggregat von in erster Linie Silizium-Elementen beinhaltet, durch kontrollierte Sinterung miteinander in Kontakt stehen, um eine Licht diffundierende optische Brücken zu erhalten sowie
eine Porosität, verbunden mit einem Vakuumsgrad von zwischen 20 und 80%.

2. Reagenzgrundlage gemäß Geltungsanspruch 1, charakterisiert dadurch, dass der Photokatalysator aus Titandioxyd in Anatasform besteht, direkt auf dem genannten Aggregat aufgesetzt.

3. Reagenzgrundlage gemäß Geltungsanspruch 1, mit der Eigenschaft, dass das Aggregat den Lichtquellen gegenüberliegend verglast ist, um Lichtverluste zu verringern in der Strukturgrundlage.

4. Herstellungsverfahren der Reagenzgrundlage nach Geltungsanspruch 2, mit der Eigenschaft, dass die Titandioxydablagerung auf der Basis von Titandioxyd, Titantetrachlorid, Titanhalogeniden oder Titanalkoholaten erhalten wird.

5. Reagenzgrundlagen gemäß Geltungsanspruch 1, mit der Eigenschaft, dass die genannten Strahlungsquellen eine Lampe (90 ; 108) eines Beleuchtungskörpers beinhalten und dass die genannte Reaktionsgrundlage (94 ; 106) in den Beleuchtungskörper integriert werden kann.

6. Reagenzgrundlage nach Geltungsanspruch 1, mit der Eigenschaft, dass sie in den Plafond oder Doppelplafond (102) eines Raumes integriert werden kann.

## Claims

1. Ultraviolet photocatalytic reactor for the treatment of fluids including :
i. a reaction support not absorbing of ultraviolet light and allowing the circulation of the fluid to be treated through the aforesaid support,
ii. a photocatalyst,
iii. means of emission of an ultraviolet radiation through the aforesaid support, **characterized in that**
the reaction support comprises a three-dimensional aggregate of elements essentially made up of silica inter-connected by controlled sintering in order to obtain diffusing optical bridges as well as a porosity associated with a vacuum rate ranging between 20 and 80%.

2. Reactor according to claim 1, **characterized by** the fact that the titanium dioxide photocatalyst in its anatase form is formed directly on the aforementioned aggregate.

3. Reactor according to claim 1 **characterized by** the fact that the aforementioned aggregate is glazed in front of the luminous emitters, in order to limit the losses to the level of the entry of the light in the structure support.

4. Manufacturing process of the reactor according to claim 2, **characterized by** the fact that the titanium dioxide deposit is obtained from titanium dioxide, tetrachloride of titanium, halides of titanium, or of titanium alcoholates.

5. Reactor according to claim 1, **characterized by** the fact that the aforementioned means of emission include a lamp 90 ; 108 in a light fixture, and in the fact that the aforementioned reaction support 94 ; 106 is capable of being integrated in the aforementioned light fixture.

6. Reactor according to claim 1, **characterized by** the fact that it is ready to be integrated in the ceiling or suspended ceiling 102 of a room.
